# EUROPEAN PATENT APPLICATION

(11) **EP 4 815 007 A1**
(43) Date of publication of application: **30.09.2026**
(21) Application number: 26167576.3
(22) Date of filing: 25.03.2026
(51) Int. Cl.: H01G 4/012, H01G 4/12, H01G 4/232, H01G 4/30

(54) **MULTILAYER CERAMIC CAPACITOR**

(30) Priority: 28.03.2025 JP 2025056998
(71) Applicant: Murata Manufacturing Co., Ltd., Nagaokakyo-shi, Kyoto 617-8555 (JP)
(72) Inventor: SHIMADA, Yasuyuki, Nagaokakyo-shi, Kyoto 617-8555 (JP); UCHIDA, Kazuhisa, Nagaokakyo-shi, Kyoto 617-8555 (JP); YASUDA, Tatsunori, Nagaokakyo-shi, Kyoto 617-8555 (JP)
(74) Representative: Stöckeler, Ferdinand

(57) **Abstract**

A multilayer body 10 includes a first inner electrode 30A having one end exposed onto a third surface F3, a second inner electrode 30B having one end exposed onto a fourth surface F4, and a dielectric layer 20 containing at least one element out of Ca and Sr. On a cross-section which is parallel to a lamination direction T and to a second direction W, and on which an end portion in the second direction W of an end portion on the third surface F3 side of the second inner electrode 30B is located closer to a fifth surface F5 side than the first inner electrode 30A, a total content of Ca and Sr in a region R15 where a distance from an end portion on the fifth surface F5 side in the second direction W of the first inner electrode 30A is equal to or below 5 µm is larger than a total content of Ca and Sr in a region R2C where a distance from a center in the second direction W of the first inner electrode 30A is equal to or below 5 µm.

## Description

### BACKGROUND OF THE INVENTION

### 1. Field of the Invention

The present invention relates to a multilayer ceramic capacitor.

### 2. Description of the Related Art

A shape of an inner electrode in a multilayer ceramic capacitor has heretofore been designed in such a shape (a racket shape) that a width of an extracting portion is formed smaller than a width of an opposed portion. It has been known that the inner electrode of the racket shape can lengthen a moisture intrusion route from outside into the inner electrode, thereby improving moisture resistance of the multilayer ceramic capacitor (Japanese Unexamined Patent Application Publication No. 2012-94820, for example).

In the multilayer ceramic capacitor including the inner electrode of the racket shape, an end portion of an inner electrode and an end portion of another inner electrode may be located orthogonal to each other when viewed in a lamination direction. In this case, a deterioration in reliability attributed to electric field concentration may occur in the vicinity of the location where the end portions of the inner electrodes are orthogonal to each other when viewed in the lamination direction.

### SUMMARY OF THE INVENTION

An object of the present invention is to provide a multilayer ceramic capacitor which is excellent in reliability.

To attain the object, a multilayer ceramic capacitor of the present invention includes a multilayer body having a first surface and a second surface opposed to each other in a lamination direction, a third surface and a fourth surface opposed to each other in a first direction orthogonal to the lamination direction, and a fifth surface and a sixth surface opposed to each other in a second direction orthogonal to the lamination direction and to the first direction, a first outer electrode disposed on the third surface, and a second outer electrode disposed on the fourth surface. The multilayer body includes at least one first inner electrode having one end exposed onto the third surface, at least one second inner electrode having one end exposed onto the fourth surface, and at least one dielectric layer containing at least one element out of Ca and Sr. On a cross-section which is parallel to the lamination direction and to the second direction, and on which an end portion in the second direction of the second inner electrode is located closer to the fifth surface side than the first inner electrode, a total content of Ca and Sr in a region where a distance from an end portion on the fifth surface side of the first inner electrode is equal to or below 5 µm is larger than a total content of Ca and Sr in a region where a distance from a center in the second direction of the first inner electrode is equal to or below 5 µm.

The present invention can provide a multilayer ceramic capacitor which is excellent in reliability.

### BRIEF DESCRIPTION OF THE DRAWINGS

Fig. 1 is a schematic perspective view of a multilayer ceramic capacitor according to an embodiment;
Fig. 2 is a cross-sectional view taken along line II-II in Fig. 1;
Fig. 3 is a cross-sectional view taken along line III-III in Fig. 1;
Fig. 4 is a cross-sectional view taken along line IV-IV in Fig. 1;
Fig. 5 is a cross-sectional view taken along line V-V in Fig. 1;
Fig. 6 is a diagram corresponding to Fig. 4, which is a diagram showing overlap of inner electrodes;
Fig. 7 is a cross-sectional view taken along line VIII-VIII in Figs. 1 and 6;
Fig. 8 is a cross-sectional view taken along line VII-VII in Figs. 1 and 6;
Fig. 9 is a cross-sectional view taken along line IX-IX in Figs. 1 and 6; and
Fig. 10 is a diagram corresponding to Fig. 6, which is a diagram showing a modification of overlap of the inner electrodes.

### DESCRIPTION OF THE PREFERRED EMBODIMENTS

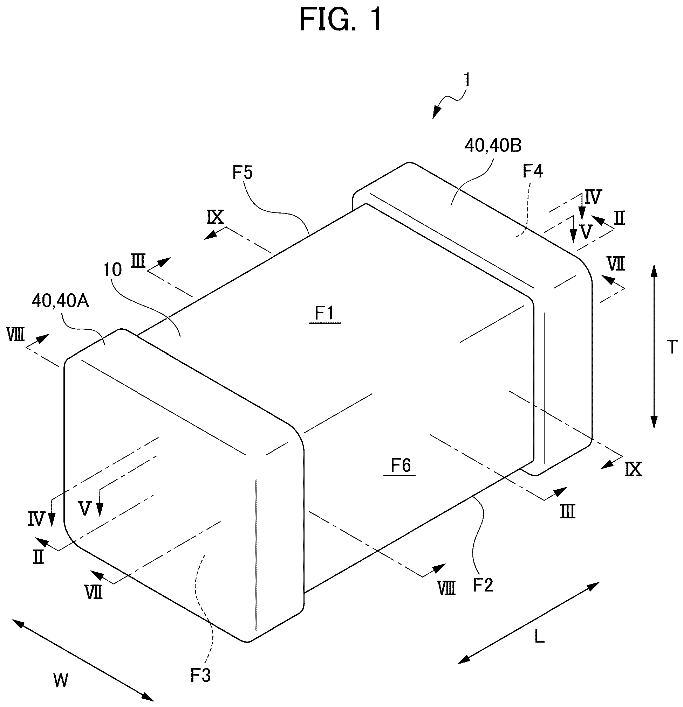

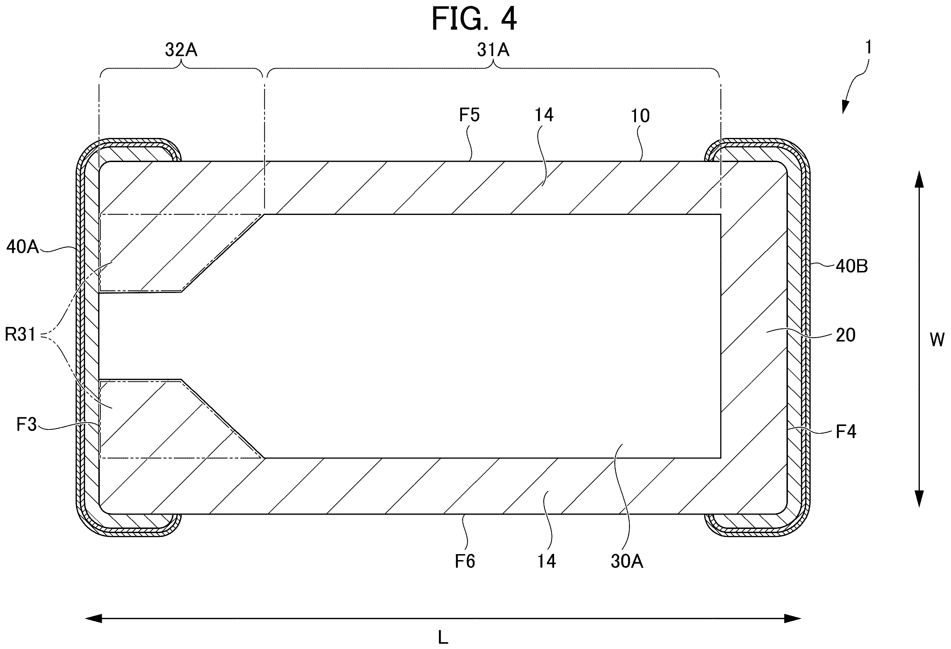

A multilayer ceramic capacitor 1 according to an embodiment of the present invention will be described below with reference to Figs. 1 to 9. Although details will be described later, the multilayer ceramic capacitor 1 is formed into a multilayer ceramic capacitor including inner electrodes of a racket shape (see Figs. 4 to 6).

### Multilayer ceramic capacitor 1

As shown in Figs. 1 to 3, the multilayer ceramic capacitor 1 includes a multilayer body 10 having a substantially rectangular parallelepiped shape, and a pair of outer electrodes 40 provided on two sides of the multilayer body 10. Moreover, the multilayer body 10 includes an effective portion 11 including multiple sets of dielectric layers 20 and inner electrodes 30.

As a term that represents an orientation of the multilayer ceramic capacitor 1 in the following description, a direction perpendicular to a mounting surface will be defined as a lamination direction T. In the present embodiment, a direction in which the inner electrodes 30 and the dielectric layers 20 are laminated will be defined as the lamination direction T.

Meanwhile, a direction in which the pair of outer electrodes 40 are provided will be defined as a first direction L. A direction orthogonal to both the first direction L and the lamination direction T will be defined as a second direction W. Of the first direction L, a direction receding from a center in the first direction L of the multilayer ceramic capacitor 1 will be referred to as "outward in the first direction L". Of the first direction L, a direction approaching the center in the first direction L of the multilayer ceramic capacitor 1 will be referred to as "inward in the first direction L". Note that the first direction L, the second direction W, and the lamination direction T are orthogonal to one another in the embodiment. In this instance, the direction in which the inner electrodes 30 and the dielectric layers 20 are laminated may be set to a horizontal direction to the mounting surface and the lamination direction T may be set to a direction perpendicular to the direction in which the inner electrodes 30 and the dielectric layers 20 are laminated.

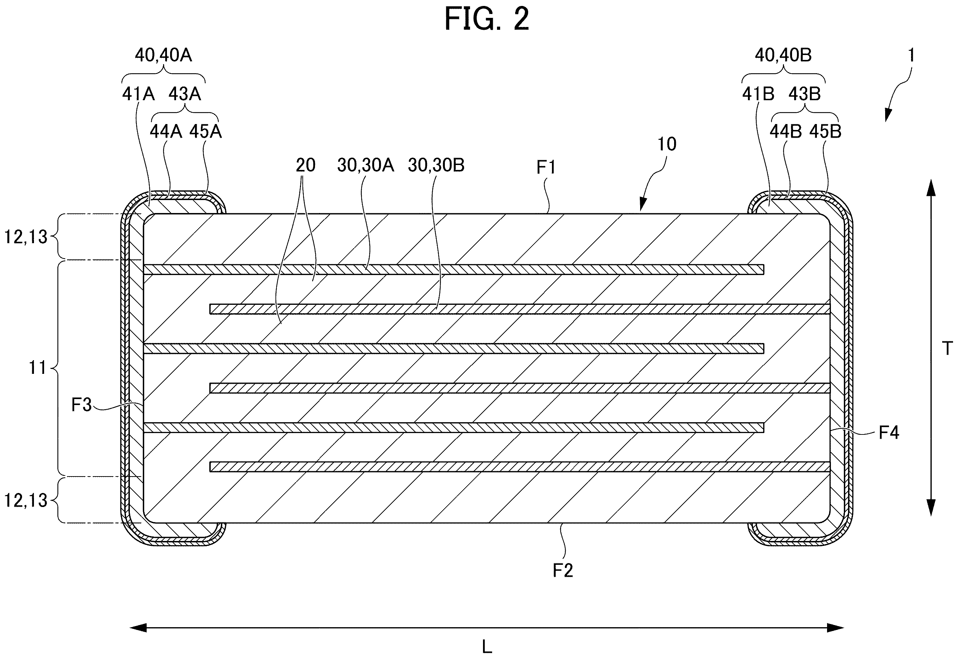

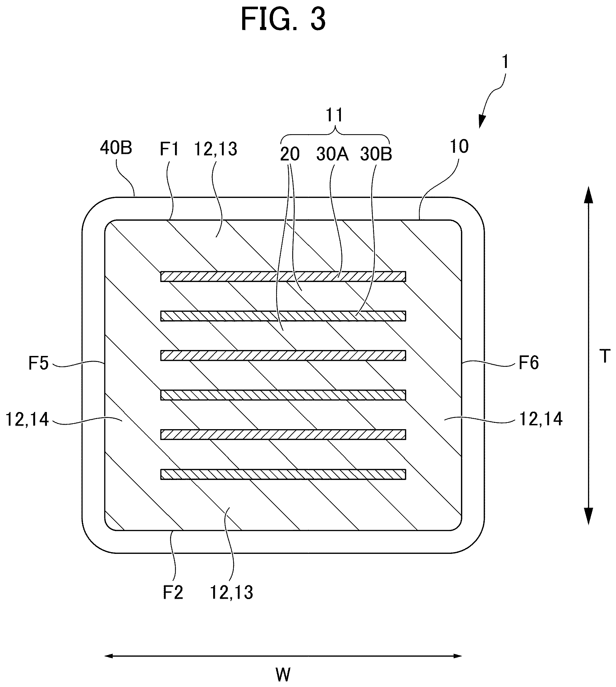

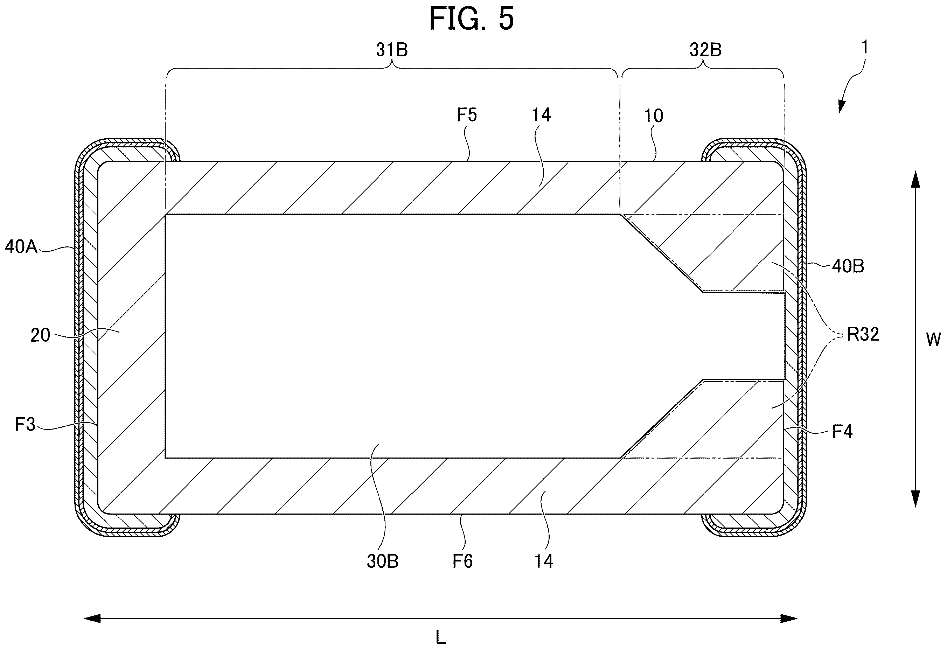

A cross-section parallel to the lamination direction T and to the first direction L of the multilayer ceramic capacitor 1 will be defined as an "LT cross-section". A cross-section of Fig. 2 represents the LT cross-section that passes through a central portion in the second direction W of the multilayer ceramic capacitor 1. A cross-section parallel to the lamination direction T and to the second direction W of the multilayer ceramic capacitor 1 will be defined as a "WT cross-section". A cross-section of Fig. 3 represents the WT cross-section that passes through a central portion in the first direction L of the multilayer ceramic capacitor 1. A cross-section parallel to the first direction L and to the second direction W of the multilayer ceramic capacitor 1 will be defined as an "LW cross-section". A cross-section of Fig. 4 represents the LW cross-section where a first inner electrode 30A is exposed. A cross-section of Fig. 5 represents the LW cross-section where a second inner electrode 30B is exposed.

A dimension in the first direction L of the multilayer ceramic capacitor 1 is set equal to or above 0.2 mm and equal to or below 5.6 mm, for example, or preferably equal to or above 1.6 mm and equal to or below 3.2 mm. A dimension in the second direction W of the multilayer ceramic capacitor 1 is set equal to or above 0.1 mm and equal to or below 5.0 mm, for example, or preferably equal to or above 0.8 mm and equal to or below 2.5 mm. A dimension in the lamination direction T of the multilayer ceramic capacitor 1 is set equal to or above 0.1 mm and equal to or below 2.5 mm, for example, or preferably equal to or above 0.8 mm and equal to or below 2.5 mm. Such external dimensions of the multilayer ceramic capacitor 1 can be measured with a micrometer gauge.

The multilayer ceramic capacitor 1 has a structure which is substantially symmetric with respect to the second direction W, for example. For this reason, a description will be given below of a portion on one side in the second direction W of the multilayer ceramic capacitor 1 while omitting a description of a portion on the other side in the second direction W of the multilayer ceramic capacitor 1 in some cases.

### Multilayer body 10

The multilayer body 10 has a first surface F1 and a second surface F2 opposed to each other in the lamination direction T, a third surface F3 and a fourth surface F4 opposed to each other in the first direction L, and a fifth surface F5 and a sixth surface F6 opposed to each other in the second direction W.

A portion of the multilayer body 10 where three outer surfaces meet will be defined as a "corner portion". A portion of the multilayer body 10 where two outer surfaces meet will be defined as a "ridge portion". The corner portions and the ridge portions of the multilayer body 10 are preferably rounded.

The multilayer body 10 includes the effective portion 11 and an ineffective portion 12.

### Effective portion

The effective portion 11 is a region where the dielectric layers 20 and the inner electrodes 30 are laminated.

### Dielectric layers

Each dielectric layer 20 preferably contains a perovskite compound such as BaTiO₃, CaTiO₃, SrTiO₃, and CaZrO₃ as a principal component. The dielectric layer 20 contains Mg, Mn, Si, and the like as an additive agent. The dielectric layer 20 may further contain Li, Na, and the like.

The dielectric layer 20 includes dielectric grains. The dielectric grains include core-shell particles, for example. A core-shell particle is a particle having such a structure (a core-shell structure) in which at least a portion of an accessory component is dissolved at a high concentration in a surficial layer (a shell layer) of the particle whereas the accessory component is either dissolved at a low concentration or not dissolved in a central portion (a core portion) of the particle.

### Inner electrodes

The inner electrodes 30 include multiple first inner electrodes 30A and multiple second inner electrodes 30B.

The first inner electrodes 30A and the second inner electrodes 30B are alternately disposed, for example. Each first inner electrode 30A is opposed to the corresponding second inner electrode 30B in the lamination direction T with the dielectric layer 20 interposed therebetween. The first inner electrode 30A is exposed onto the third surface F3. The first inner electrode 30A is electrically connected to a first outer electrode 40A. The second inner electrode 30B is exposed onto the fourth surface F4. The second inner electrode 30B is electrically connected to a second outer electrode 40B. Electric charges are accumulated between opposed portions 52 of the first inner electrode 30A and the second inner electrode 30B located adjacent to each other in the lamination direction T, which function as a capacitor.

Here, the first inner electrodes 30A and the second inner electrodes 30B may be collectively referred to as the "inner electrodes 30" in some cases. Of the multiple inner electrodes 30, the one located closest to the first surface F1 may be the first inner electrode 30A or the second inner electrode 30B.

The inner electrodes 30 contain Ni as a principal component, for example. However, the present invention is not limited thereto. The inner electrodes 30 may be formed from a metallic material such as Cu, Ag, Pd, Ag-Pd alloy, and Au. In addition thereto, the inner electrodes 30 may contain BT particles (particles containing Ba and Ti) as a co-material.

A thickness of each inner electrode 30 is preferably equal to or above 0.3 µm. Crystallite diameters in a direction orthogonal to the lamination direction T of the Ni particles contained in the inner electrodes 30 are preferably equal to or above 300 nm and equal to or below 5000 nm.

In a case where a diameter in the orthogonal direction (such as the first direction L) is longer than the thickness in the lamination direction T, for example, the crystallite diameter is calculated in terms of the crystallite diameter in the first direction L.

As shown in Fig. 4, the first inner electrode 30A includes a 1-1 region 31A, and a 1-2 region 32A having a shorter dimension in the second direction W than the 1-1 region 31A and located closer to the third surface F3 side than the 1-1 region 31A. A shape of the first inner electrode 30A is formed into a racket shape.

The entirety of the 1-1 region 31A is located away from an outer surface of the multilayer body 10. A shape of the 1-1 region 31A viewed in the lamination direction T is formed into a substantially rectangular shape, for example.

A dimension in the second direction W of the 1-2 region 32A is gradually reduced from the fourth surface F4 side toward the third surface F3 side and is then set constant, for example. However, this dimension is not limited thereto. The dimension in the second direction W of the 1-2 region 32A may be constant throughout the entire region of the 1-2 region 32A, or may be gradually reduced from the fourth surface F4 side toward the third surface F3 side throughout the entire region of the 1-2 region 32A.

An average dimension in the second direction W of a portion of the 1-2 region 32A exposed onto the third surface F3 is shorter than an average dimension in the second direction W of the 1-1 region 31A, which is preferably equal to or above 50% and equal to or below 90% relative to the average dimension in the second direction W of the 1-1 region 31A. The average dimension in the second direction W of the portion of the 1-2 region 32A exposed onto the third surface F3 is defined by an average value in the second direction W of the first inner electrode 30A exposed onto the same surface, while the average dimension in the second direction W of the 1-1 region 31A is defined by an average value in the second direction W of the first inner electrode 30A located on the same plane parallel to the lamination direction T and to the second direction W at a position equivalent to 1/2 in the first direction L of the multilayer body 10.

A concentration of Sn contained in the 1-2 region 32A is preferably higher than a concentration of Sn contained in the 1-1 region 31A. Meanwhile, a Sn layer is preferably disposed in the 1-2 region 32A. The concentration of Sn contained in the 1-2 region 32A is defined by an average peak intensity value in accordance with TEM-EDX at three points in the 1-2 region 32A on the surface parallel to the lamination direction T and to the second direction W at the position equivalent to 1/2 in the first direction L of the 1-2 region 32A, and the concentration of Sn contained in the 1-1 region 31A is defined by an average peak intensity value in accordance with the TEM-EDX at three points in the 1-1 region 31A on the surface parallel to the lamination direction T and to the second direction W at the position equivalent to 1/2 in the first direction L of the multilayer body 10.

When an end portion in the second direction W of the 1-2 region 32A is orthogonal to the second inner electrode 30B, it is thought to be likely that electric field concentration may occur due to overlap of the inner electrodes 30 having different electric potentials at a location where the end portion in the second direction W of the 1-2 region 32A intersects with the second inner electrode 30B. However, the above-described configuration can improve reliability at the location where the electric field concentration is likely to occur.

Meanwhile, the present invention is not limited to the above-mentioned configuration and a Sn layer may be disposed in the 1-1 region 31A. In this case, a thickness of a Sn layer disposed in the 1-2 region 32A is preferably larger than a thickness of the Sn layer disposed in the 1-1 region 31A. When a large amount of Sn is contained in the inner electrode 30 in order to increase the thickness of the Sn layer disposed in the 1-1 region 31A, the melting point of the inner electrode 30 may drop and a coverage of the inner electrode 30 may be degraded due to over-sintering of the inner electrode 30 in a firing step to be described later. Thus, an electrostatic capacity of the multilayer ceramic capacitor 1 may be excessively reduced. By setting the thickness of the Sn layer disposed in the 1-1 region 31A smaller than the thickness of the Sn layer disposed in the 1-2 region 32A, it is possible to reduce an influence of the Sn layer in the 1-1 region 31A, which is the region provided mainly for forming the electrostatic capacity.

A coverage of the 1-2 region 32A is preferably set lower than a coverage of the 1-1 region 31A. The coverage of the 1-2 region 32A is set preferably equal to or above 80%. This makes it possible to suppress interlayer detachment. The coverage is calculated by dividing an area where the first inner electrode 30A is actually present by an area surrounded by an outline of the first inner electrode 30A in terms of a field of view of the entire first inner electrode 30A with an SEM on the surface parallel to the first direction L and to the second direction W, for example.

A Mg region is preferably disposed at an end portion in the second direction W of the 1-2 region 32A. Specifically, the Mg region is preferably disposed in such a way as to extend in the second direction W from the 1-2 region 32A.

A thickness (a dimension in the lamination direction T) of the Mg region disposed at a portion of the end portion in the second direction W of the 1-2 region 32A located close to the 1-1 region 31A is preferably larger than a thickness of the Mg region disposed at a portion of the end portion in the second direction W of the 1-2 region 32A located close to the third surface F3.

An area of the Mg region disposed at the portion of the end portion in the second direction W of the 1-2 region 32A located close to the 1-1 region 31A is preferably larger than an area of the Mg region disposed at the portion of the end portion in the second direction W of the 1-2 region 32A located close to the third surface F3. Specifically, when the 1-2 region 32A is divided into five equal pieces in the first direction L, a cross-section passing through an end portion in the second direction W of the 1-2 region 32A located closest to the center in the first direction L and a cross-section passing through an end portion in the second direction W of the 1-2 region 32A located second closest to the fourth surface F4 side after a region located closest to the third surface F3 side are subjected to measurement of the respective Mg regions that are parallel to the respective cross-sections disposed at the first inner electrode 30A with the SEM and the like, and respective average values thereof are obtained.

The thickness of the Mg region disposed at the end portion in the second direction W of the 1-2 region 32A is preferably larger than the thickness of the Mg region disposed at the end portion in the second direction W of the 1-1 region 31A.

A total number of the Mg regions disposed at the end portion in the second direction W of the 1-2 region 32A is preferably larger than a total number of the Mg regions disposed at the end portion in the second direction W of the 1-1 region 31A.

According to these configurations, when the end portion in the second direction W of the 1-2 region 32A is orthogonal to the second inner electrode 30B, it is possible to improve reliability at the location where the electric field concentration is likely to occur.

The thickness of the Mg regions disposed at the end portion in the second direction W of the 1-2 region 32A is obtained from an average value at the time of observing SEM images of the respective Mg regions on the surface parallel to the lamination direction T and to the second direction W at the position equivalent to 1/2 in the first direction L of the 1-2 region 32A. Meanwhile, the thickness of the Mg regions disposed at the end portion in the second direction W of the 1-1 region 31A is obtained from an average value at the time of observing SEM images of the respective Mg regions on the surface parallel to the lamination direction T and to the second direction W at the position equivalent to 1/2 in the first direction L of the multilayer body 10.

More specifically, when the multilayer ceramic capacitor 1 is polished in the first direction L, the end portion in the second direction W of the 1-2 region 32A is exposed onto the WT cross-section in the first place. On the WT cross-section in this instance, the number of the Mg regions relative to the number of the first inner electrodes 30A, the thicknesses in the lamination direction T of the respective Mg regions, the thicknesses in the second direction W of the respective Mg regions, and the areas thereof at the end portion in the second direction W of the 1-2 region 32A are observed.

As the polishing progresses further, the number of the Mg regions relative to the number of the first inner electrodes 30A, the thicknesses in the lamination direction T of the respective Mg regions, the thicknesses in the second direction W of the respective Mg regions, and the areas thereof at the end portion in the second direction W of the 1-1 region 31A on the WT cross-section to which the 1-1 region 31A is exposed are observed.

Meanwhile, the thickness in the lamination direction T of the Mg regions disposed in a certain range is determined by measuring a maximum value of the dimension in the lamination direction T of the Mg region for each of the Mg regions existing in the range, and deriving an average value of the values thus obtained. In the meantime, the thickness in the second direction W of the Mg regions disposed in the certain range is determined by measuring a maximum value of the dimension in the second direction W of the Mg region for each of the Mg regions existing in the range, and deriving an average value of the values thus obtained.

A total content of Mg and Mn contained in a region between the 1-2 region 32A and the fifth surface F5 is preferably larger than a total content of Mg and Mn contained in a region between the 1-1 region 31A and the fifth surface F5.

The region between the 1-2 region 32A and the fifth surface F5 is considered to be prone to deterioration in denseness of the dielectric layer 20 due to insufficient sintering of the dielectric layer 20. However, according to the above-described configuration, it is possible to improve a sintering performance of the dielectric layer 20 and to improve the denseness of the dielectric layer 20 in the region between the 1-2 region 32A and the fifth surface F5.

A grain diameter D50 of a dielectric body located in a region where a distance from the end portion in the second direction W of the 1-2 region 32A is equal to or below 5 µm is preferably smaller than a grain diameter D50 of a dielectric body located in a central region when a region located between the 1-2 region 32A and the second inner electrode 30B opposed thereto in the lamination direction T is divided into five equal pieces in the second direction W. As for the grain diameter D50, the dielectric body was subjected to a thermal treatment at 1000°C in order to clarify boundaries (grain boundaries) among the grains, and each region was observed at the magnification of 20000 times with the SEM. Then, 100 pieces of the grains were sampled at random from the obtained SEM image, and equivalent circle diameters were calculated by obtaining areas of portions inside the grain boundaries of the respective grains. Thereafter, the grain diameter D50 was calculated therefrom.

In this way, it is possible to improve reliability at the location where the electric field concentration is likely to occur when the end portion in the second direction W of the 1-2 region 32A is substantially orthogonal to the second inner electrode 30B.

For example, when a region interposed between the 1-2 region 32A and a 2-1 region 31B on the WT cross-section is divided into three equal pieces in the second direction W, it is preferable to satisfy at least one of the following conditions that the grain diameter D50 of the dielectric grains located in a central region out of the three regions is larger than the grain diameter D50 of the dielectric grains located in a region on the fifth surface F5 side out of the three regions, and that the grain diameter D50 of the dielectric grains located in the central region is larger than the grain diameter D50 of the dielectric grains located in a region on the sixth surface F6 side out of the three regions.

For example, when the region interposed between the 1-2 region 32A and the 2-1 region 31B on the LT cross-section is divided into three equal pieces in the first direction L, it is preferable to satisfy at least one of the following conditions that the grain diameter D50 of the dielectric grains located in a central region out of the three regions is larger than the grain diameter D50 of the dielectric grains located in a region on the third surface F3 side out of the three regions, and that the grain diameter D50 of the dielectric grains located in a region on the fourth surface F4 side out of the three regions is larger than the grain diameter D50 of the dielectric grains located in the region on the third surface F3 side out of the three regions.

In this way, when the end portion in the second direction W of the 1-2 region 32A is substantially orthogonal to the second inner electrode 30B, it is possible to suppress reduction in capacity at a major portion that forms the capacity and to improve reliability at the location where the electric field concentration is likely to occur.

As shown in Fig. 5, the second inner electrode 30B includes the 2-1 region 31B, and a 2-2 region 32B that has a shorter dimension in the second direction W than the 2-1 region 31B and is located closer to the fourth surface F4 side than the 2-1 region 31B.

The entirety of the 2-1 region 31B is located away from the outer surface of the multilayer body 10. A shape viewed in the lamination direction T of the 2-1 region 31B is formed into a substantially rectangular shape, for example. The 2-1 region 31B is opposed to the 1-1 region 31A in the lamination direction T with the dielectric layer 20 interposed therebetween.

The dimension in the second direction W of the 2-2 region 32B is gradually reduced from the third surface F3 side toward the fourth surface F4 side and is then set constant, for example. However, the dimension in the second direction W of the 2-2 region 32B is not limited to the foregoing, and may be set constant throughout the entire region of the 2-2 region 32B, or may be gradually reduced from the third surface F3 side toward the fourth surface F4 side throughout the entire region of the 2-2 region 32B, for example.

An average dimension in the second direction W of a portion of the 2-2 region 32B exposed onto the fourth surface F4 is set shorter than an average dimension in the second direction W of the 2-1 region 31B, which is set preferably equal to or above 50% and equal to or below 90% relative to the average dimension in the second direction W of the 2-1 region 31B. The average dimension in the second direction W of the portion of the 2-2 region 32B exposed onto the fourth surface F4 is defined by an average value in the second direction W of the second inner electrode 30B exposed onto the same surface, and the average dimension in the second direction W of the 2-1 region 31B is defined by an average value in the second direction W of the second inner electrode 30B located on the same plane parallel to the lamination direction T and to the second direction W at the position equivalent to 1/2 in the first direction L of the multilayer body 10.

Here, the configuration of the second inner electrode 30B substantially corresponds to the configuration of the first inner electrode 30A which is inverted in the first direction L, for example. The configuration of the 2-1 region 31B substantially corresponds to the configuration of the 1-1 region 31A which is inverted in the first direction L, for example, and the configuration of the 2-2 region 32B substantially corresponds to the configuration of the 1-2 region 32A which is inverted in the first direction L, for example. However, the configuration of the second inner electrode 30B does not necessarily have to correspond to the configuration of the first inner electrode 30A inverted in the first direction L.

A concentration of Sn contained in the 2-2 region 32B is preferably higher than a concentration of Sn contained in the 2-1 region 31B. Meanwhile, a Sn layer is preferably disposed in the 2-2 region 32B. The concentration of Sn contained in the 2-2 region 32B is defined by an average peak intensity value in accordance with the TEM-EDX at three points in the 2-2 region 32B on the surface parallel to the lamination direction T and to the second direction W at the position equivalent to 1/2 in the first direction L of the 2-2 region 32B, and the concentration of Sn contained in the 2-1 region 31B is defined by an average peak intensity value in accordance with the TEM-EDX at three points in the 2-1 region 31B on the surface parallel to the lamination direction T and to the second direction W at the position equivalent to 1/2 in the first direction L of the multilayer body 10.

When an end portion in the second direction W of the 2-2 region 32B is orthogonal to the first inner electrode 30A, it is thought to be likely that electric field concentration may occur due to overlap of the inner electrodes 30 having different electric potentials at a location where the end portion in the second direction W of the 2-2 region 32B is orthogonal to the first inner electrode 30A. However, the above-described configuration can improve reliability at the location where the electric field concentration is likely to occur.

Meanwhile, the present invention is not limited to the foregoing and a Sn layer may be disposed in the 2-1 region 31B. In this case, a thickness of a Sn layer disposed in the 2-2 region 32B is preferably larger than a thickness of the Sn layer disposed in the 2-1 region 31B. When a large amount of Sn is contained in the inner electrode 30 in order to increase the thickness of the Sn layer disposed in the 2-1 region 31B, the melting point of the inner electrode 30 may drop and the coverage of the inner electrode 30 may be degraded due to over-sintering of the inner electrode 30 in the firing step to be described later. Thus, the electrostatic capacity of the multilayer ceramic capacitor 1 may be excessively reduced. By setting the thickness of the Sn layer disposed in the 2-1 region 31B smaller than the thickness of the Sn layer disposed in the 2-2 region 32B, it is possible to reduce an influence of the Sn layer in the 2-1 region 31B, which is the region provided mainly for forming the electrostatic capacity.

A coverage of the 2-2 region 32B is preferably set lower than a coverage of the 2-1 region 31B. The coverage of the 2-2 region 32B is set preferably equal to or above 80%. This makes it possible to suppress interlayer detachment. The coverage is calculated by dividing an area where the second inner electrode 30B is actually present by an area surrounded by an outline of the second inner electrode 30B in terms of a field of view of the entire second inner electrode 30B with an SEM image on the surface parallel to the first direction L and to the second direction W, for example.

A Mg region is preferably disposed at an end portion in the second direction W of the 2-2 region 32B. Specifically, the Mg region is preferably disposed in such a way as to extend in the second direction W from the 2-2 region 32B. The Mg region can be observed with the SEM and the like.

A thickness (a dimension in the lamination direction T) of a Mg region disposed at a portion of an end portion in the second direction W of the 2-2 region 32B located close to the 2-1 region 31B is preferably larger than a thickness of the Mg region disposed at a portion of the end portion in the second direction W of the 2-2 region 32B located close to the fourth surface F4.

An area of the Mg region disposed at the portion of the end portion in the second direction W of the 2-2 region 32B located close to the 2-1 region 31B is preferably larger than an area of the Mg region disposed at the portion of the end portion in the second direction W of the 2-2 region 32B located close to the fourth surface F4. Specifically, when the 2-2 region 32B is divided into five equal pieces in the first direction L, a cross-section passing through an end portion in the second direction W of the 2-2 region 32B located closest to the center in the first direction L and a cross-section passing through an end portion in the second direction W of the 2-2 region 32B located second closest to the third surface F3 side after a region located closest to the fourth surface F4 side are subjected to measurement of the respective Mg regions that are parallel to the respective cross-sections disposed at the second inner electrode 30B with the SEM and the like, and respective average values thereof are obtained.

The thickness of the Mg region disposed at the end portion in the second direction W of the 2-2 region 32B is preferably larger than the thickness of the Mg region disposed at the end portion in the second direction W of the 2-1 region 31B.

A total number of the Mg regions disposed at the end portion in the second direction W of the 2-2 region 32B is preferably larger than a total number of the Mg regions disposed at the end portion in the second direction W of the 2-1 region 31B.

According to these configurations, when the end portion in the second direction W of the 2-2 region 32B is orthogonal to the second inner electrode 30B, it is possible to improve reliability at the location where the electric field concentration is likely to occur.

The thickness of the Mg regions disposed at the end portion in the second direction W of the 2-2 region 32B is obtained from an average value at the time of observing SEM images of the respective Mg regions on the surface parallel to the lamination direction T and to the second direction W at the position equivalent to 1/2 in the first direction L of the 2-2 region 32B. Meanwhile, the thickness of the Mg regions disposed at the end portion in the second direction W of the 2-1 region 31B is obtained from an average value at the time of observing SEM images of the respective Mg regions on the surface parallel to the lamination direction T and to the second direction W at the position equivalent to 1/2 in the first direction L of the multilayer body 10.

More specifically, when the multilayer ceramic capacitor 1 is polished in the first direction L, the end portion in the second direction W of the 2-2 region 32B is exposed onto the WT cross-section in the first place. On the WT cross-section in this instance, the number of the Mg regions relative to the number of the second inner electrodes 30B, the thicknesses in the lamination direction T of the respective Mg regions, the thicknesses in the second direction W of the respective Mg regions, and the areas thereof at the end portion in the second direction W of the 2-2 region 32B are observed.

As the polishing progresses further, the number of the Mg regions relative to the number of the second inner electrodes 30B, the thicknesses in the lamination direction T of the respective Mg regions, the thicknesses in the second direction W of the respective Mg regions, and the areas thereof at the end portion in the second direction W of the 2-1 region 31B on the WT cross-section to which the 2-1 region 31B is exposed are observed.

Meanwhile, the thickness in the lamination direction T of the Mg regions disposed in a certain range is determined by measuring a maximum value of the dimension in the lamination direction T of the Mg region for each of the Mg regions existing in the range, and deriving an average value of the values thus obtained. In the meantime, the thickness in the second direction W of the Mg regions disposed in the certain range is determined by measuring a maximum value of the dimension in the second direction W of the Mg region for each of the Mg regions existing in the range, and deriving an average value of the values thus obtained.

A total content of Mg and Mn included in a region between the 2-2 region 32B and the fifth surface F5 is preferably larger than a total content of Mg and Mn included in a region between the 2-1 region 31B and the fifth surface F5.

The region between the 2-2 region 32B and the fifth surface F5 is considered to be prone to deterioration in denseness of the dielectric layer 20 due to insufficient sintering of the dielectric layer 20. However, according to the above-described configuration, it is possible to improve the sintering performance of the dielectric layer 20 and to improve the denseness of the dielectric layer 20 in the region between the 2-2 region 32B and the fifth surface F5.

A grain diameter D50 of a dielectric body located in a region where a distance from the end portion in the second direction W of the 2-2 region 32B is equal to or below 5 µm is preferably smaller than a grain diameter D50 of a dielectric body located in a central region when the 2-1 region 31B is divided into five equal pieces in the second direction W. As for the grain diameter D50, the dielectric body was subjected to a thermal treatment at 1000°C in order to clarify boundaries (grain boundaries) among the grains, and each region was observed at the magnification of 20000 times with the SEM. Then, 100 pieces of the grains were sampled at random from the obtained SEM image, and equivalent circle diameters were calculated by obtaining areas of portions inside the grain boundaries of the respective grains. Thereafter, the grain diameter D50 was calculated therefrom.

In this way, it is possible to improve reliability at the location where the electric field concentration is likely to occur when the end portion in the second direction W of the 2-2 region 32B is substantially orthogonal to the first inner electrode 30A.

For example, when a region interposed between the 2-2 region 32B and the 1-1 region 31A on the WT cross-section is divided into three equal pieces in the second direction W, it is preferable to satisfy at least one of the following conditions that the grain diameter D50 of the dielectric grains located in a central region out of the three regions is larger than the grain diameter D50 of the dielectric grains located in a region on the fifth surface F5 side out of the three regions, and that the grain diameter D50 of the dielectric grains located in the central region is larger than the grain diameter D50 of the dielectric grains located in a region on the sixth surface F6 side out of the three regions.

For example, when the region interposed between the 2-2 region 32B and the 1-1 region 31A on the LT cross-section is divided into three equal pieces in the first direction L, it is preferable to satisfy at least one of the following conditions that the grain diameter D50 of the dielectric grains located in a central region out of the three regions is larger than the grain diameter D50 of the dielectric grains located in a region on the fourth surface F4 side out of the three regions, and that the grain diameter D50 of the dielectric grains located in a region on the third surface F3 side out of the three regions is larger than the grain diameter D50 of the dielectric grains located in the region on the fourth surface F4 side out of the three regions.

In this way, when the end portion in the second direction W of the 2-2 region 32B is substantially orthogonal to the first inner electrode 30A, it is possible to suppress reduction in capacity at a major portion that forms the capacity and to improve reliability at the location where the electric field concentration is likely to occur.

### Ineffective portion

The ineffective portion 12 is a region where the inner electrodes 30 are not disposed. The ineffective portion 12 includes outer layer portions 13 that sandwich the effective portion 11 in the lamination direction T, and side gap portions 14 that sandwich the effective portion 11 in the second direction W.

### Outer layer portions

The outer layer portions 13 are disposed on the first surface F1 side and the second surface F2 side of the effective portion 11. A material of the outer layer portions 13 may be the same as a material of the dielectric layer 20 of the effective portion 11 or may be different therefrom. An additive agent to be added to the outer layer portions 13 may be different from an additive agent to be added to the dielectric layer 20 of the effective portion 11.

### Side gap portions

The side gap portions 14 are disposed on the fifth surface F5 side and the sixth surface F6 side of the effective portion 11 in the multilayer body 10. A material of the side gap portions 14 may be the same as the material of the dielectric layer 20 of the effective portion 11 or may be different therefrom. An additive agent to be added to the side gap portions 14 may be different from the additive agent to be added to the dielectric layer 20 of the effective portion 11.

### Outer electrodes

The outer electrodes 40 include the first outer electrode 40A and the second outer electrode 40B. The first outer electrode 40A is disposed on the third surface F3 and is disposed so as to extend from the third surface F3 onto the first surface F1, the second surface F2, the fifth surface F5, and the sixth surface F6. The second outer electrode 40B is disposed on the fourth surface F4 and is disposed so as to extend from the fourth surface F4 onto the first surface F1, the second surface F2, the fifth surface F5, and the sixth surface F6. When the first outer electrode 40A and the second outer electrode 40B do not have to be explained distinctively, these electrodes will be explained collectively as the "outer electrodes 40".

Each outer electrode 40 includes an underlying electrode 41 disposed on the outer surface of the multilayer body 10, and a plated layer 43 disposed on the underlying electrode 41, for example.

The underlying electrode 41 is a sintered layer containing a conductive metal and a glass component, for example. The conductive metal is formed from Cu, for example.

The plated layer 43 preferably includes a lower plated layer 44 disposed on the underlying electrode 41 and an upper plated layer 45 disposed on the lower plated layer 44. In the present embodiment, the lower plated layer 44 is formed as a Ni-plated layer 44 and the upper plated layer 45 is formed as a Sn-plated layer 45.

The Ni-plated layer 44 can prevent the underlying electrode 41 from being eroded by solder used for mounting a ceramic electronic component. The Sn-plated layer 45 can enhance wettability of solder when the multilayer ceramic capacitor 1 is mounted, thus facilitating mounting.

Note that the configuration of the outer electrode 40 is not limited to the above-described configuration.

For example, the conductive metal contained in the underlying electrode 41 is not limited to Cu but may be Ni, Ag, Pd, Au, Ag-Pd alloy, or the like. The underlying electrode 41 may contain ceramic powder as a co-material. The outer electrode 40 may include the underlying electrode 41 that contains Ni and the co-material, for example. In the outer electrode 40 including the underlying electrode 41 that contains Cu and the glass component, the Ni-plated layer 44, and the Sn-plated layer 45, for instance, the underlying electrode 41 containing Ni and the co-material may be provided instead of the underlying electrode 41 containing Cu and the glass component or in addition to the underlying electrode 41 containing Cu and the glass component.

The outer electrode 40 may include a resin layer that contains conductive particles and a thermosetting resin. The resin layer is formed by applying conductive paste that contains the conductive particles and the thermosetting resin to either the underlying electrode 41 or the multilayer body 10, and further subjecting the conductive paste to a thermal treatment.

For example, the outer electrode 40 may include the underlying electrode 41 containing Cu and the glass component, the resin layer formed on the underlying electrode 41, the Ni-plated layer 44 formed on the resin layer, and the Sn-plated layer 45 formed on the Ni-plated layer 44. Here, the resin layer may be directly formed at the multilayer body 10 or provided instead of the underlying electrode 41. The resin layer may include multiple layers.

The underlying electrode 41 may be a thin-film layer equal to or below 1 µm, which is formed in accordance with a thin-film forming method such as a sputtering method and a vapor deposition method with metal particles deposited thereon.

The outer electrode 40 may be a plated electrode formed solely from the plated layers without providing the underlying electrode 41. In this case, the plated layers are directly formed at the surface of the multilayer body 10, and are directly electrically connected to the inner electrodes 30. When the outer electrode 40 adopts the above-described configuration, the plated layer may be formed after a catalyst is disposed on the surface of the multilayer body 10 as a pretreatment for plating.

The plated layer serving as the plated electrode preferably includes the lower plated layer 44 formed at the surface of the multilayer body 10, and the upper plated layer 45 formed at the surface of the lower plated layer 44. The lower plated layer 44 is preferably formed by using Ni having a solder barrier performance. However, in the case where the inner electrode 30 is formed by using Ni, the lower plated layer 44 is preferably formed by using Cu having a fine bonding performance to Ni. The upper plated layer 45 is preferably formed by using Sn or Au having fine wettability. Note that the upper plated layer 45 may be formed when needed.

The configuration of the outer electrode 40 is not limited to the above-described configuration but may be modified as appropriate. The outer electrode 40 may adopt a combination of two or more configurations described above.

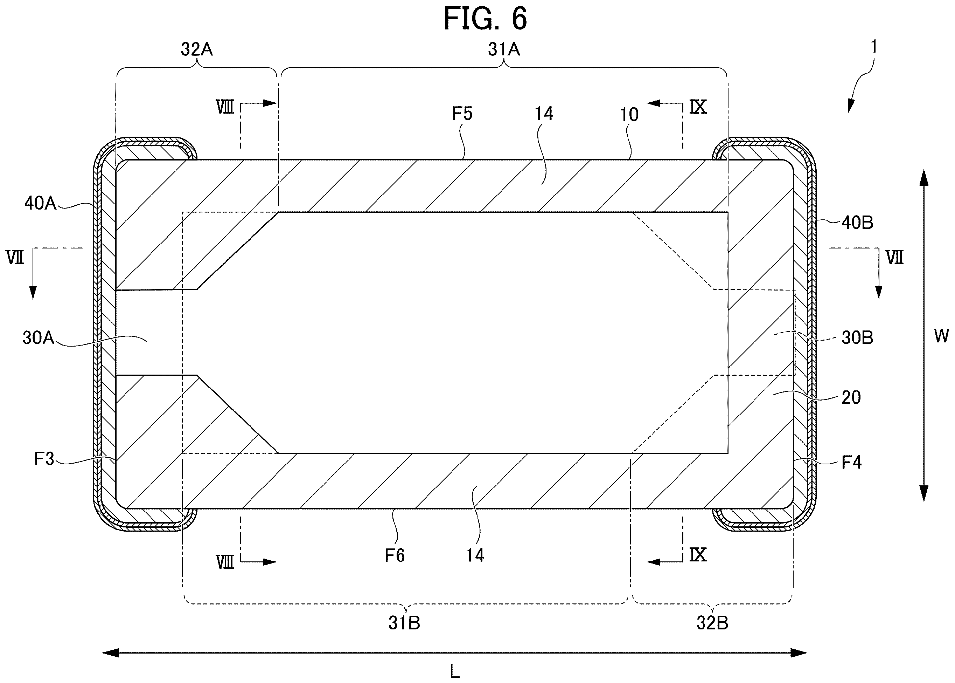

Here, as shown in Fig. 6, an end portion on the third surface F3 side of the second inner electrode 30B intersects with an end portion in the second direction W of the 1-2 region 32A when viewed in the lamination direction T. The end portion on the third surface F3 side of the second inner electrode 30B intersects in the lamination direction T with a portion of the 1-2 region 32A having a substantially constant dimension in the second direction W, for example.

### Configuration of periphery of first inner electrode

### Configuration of portion on fifth surface side on WT cross-section

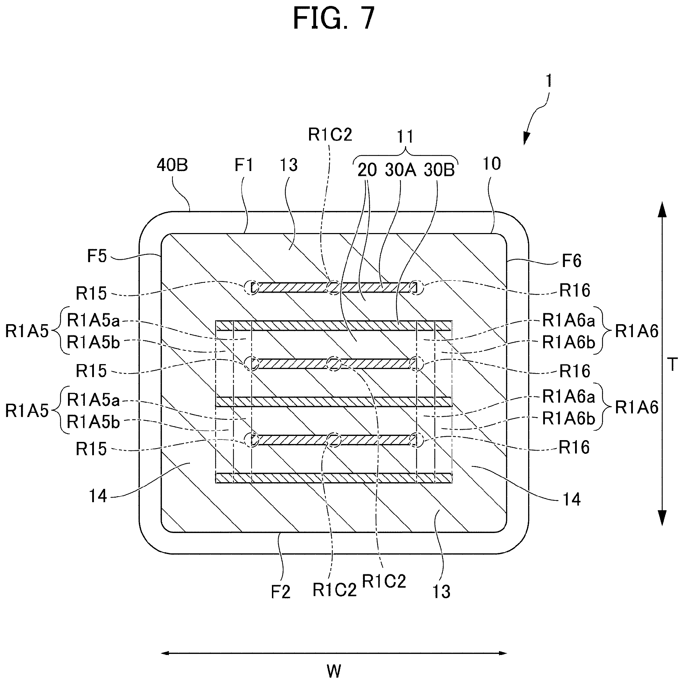

As shown in Fig. 7, on a cross-section passing through the first inner electrode 30A and the second inner electrode 30B and parallel to the lamination direction T and to the second direction W, the end portion on the fifth surface F5 side of the second inner electrode 30B is located closer to the fifth surface F5 side than the first inner electrode 30A.

Here, a cross-section which is parallel to the lamination direction T and to the second direction W, and on which an end portion on one side in the second direction W of the first inner electrode 30A is located closer to another side in the second direction W than an end portion on one side in the second direction W of the second inner electrode 30B may be referred to as an "intersecting portion WT cross-section" in some cases. A cross-section which is parallel to the lamination direction T and to the second direction W, and on which the end portion on the fifth surface F5 side of the second inner electrode 30B is located closer to the fifth surface F5 side than the end portion on the fifth surface F5 side of the first inner electrode 30A may be referred to as a "first intersecting portion WT cross-section" in some cases. Fig. 7 represents the first intersecting portion WT cross-section. Fig. 7 shows the entirety in the lamination direction T of the multilayer ceramic capacitor 1.

Here, of a portion of the end portion in the second direction W of the 1-2 region 32A overlapping the second inner electrode 30B in the lamination direction T, a range where the WT cross-section passing through the 1-2 region 32A constitutes the intersecting portion WT cross-section may be part of a portion of the end portion in the second direction W of the 1-2 region 32A overlapping the second inner electrode 30B in the lamination direction T. The same applies to the 2-2 region 32B.

On the intersecting portion WT cross-section, a total content of Ca and Sr in a region where a distance from the end portion on the one side in the second direction W of the first inner electrode 30A is equal to or below 5 µm is larger than a total content of Ca and Sr in a region where a distance from the center in the second direction W of the first inner electrode 30A is equal to or below 5 µm. In this instance, Ca and Sr may be dissolved in the BT particles and present in states of BCT particles, BST particles, and BCST particles.

For example, on the first intersecting portion WT cross-section, a total content of Ca and Sr in a region R15 where a distance from the end portion on the fifth surface F5 side of the first inner electrode 30A is equal to or below 5 µm is larger than a total content of Ca and Sr in a region R1C2 where the distance from the center in the second direction W of the first inner electrode 30A is equal to or below 5 µm. The total content of Ca and Sr is defined by concentrations of Ca and Sr present in each region by way of an elemental analysis using the TEM.

On the first intersecting portion WT cross-section, in a region interposed between the second inner electrodes 30B that are located adjacent to each other, a region located closer to the fifth surface F5 side than the first inner electrode 30A interposed between the second inner electrodes 30B located adjacent to each other will be defined as an "A region R1A5".

A content of Ca in a region R1A5a on the sixth surface F6 side when the A region R1A5 is divided into two equal pieces in the second direction W may be larger than a content of Ca in a region R1A5b on the fifth surface F5 side when the A region R1A5 is divided into two equal pieces in the second direction W.

### Configuration of portion on sixth surface side on WT cross-section

On the first intersecting portion WT cross-section, an end portion on the sixth surface F6 side of the second inner electrode 30B may be located closer to the sixth surface F6 side than the first inner electrode 30A.

On the first intersecting portion WT cross-section, a total content of Ca and Sr in a region R16 where a distance from an end portion on one side of the sixth surface F6 of the first inner electrode 30A is equal to or below 5 µm is larger than the total content of Ca and Sr in the region R1C2 where the distance from the center in the second direction W of the first inner electrode 30A is equal to or below 5 µm.

On the first intersecting portion WT cross-section, in a region interposed between the second inner electrodes 30B that are located adjacent to each other, a region located closer to the sixth surface F6 side than the first inner electrode 30A interposed between the second inner electrodes 30B located adjacent to each other will be defined as an "A region R1A6". A content of Ca in a region R1A6a on the fifth surface F5 side when the A region R1A6 is divided into two equal pieces in the second direction W may be larger than a content of Ca in a region R1A6b on the sixth surface F6 side when the A region R1A6 is divided into two equal pieces in the second direction W.

### Configuration on LT cross-section

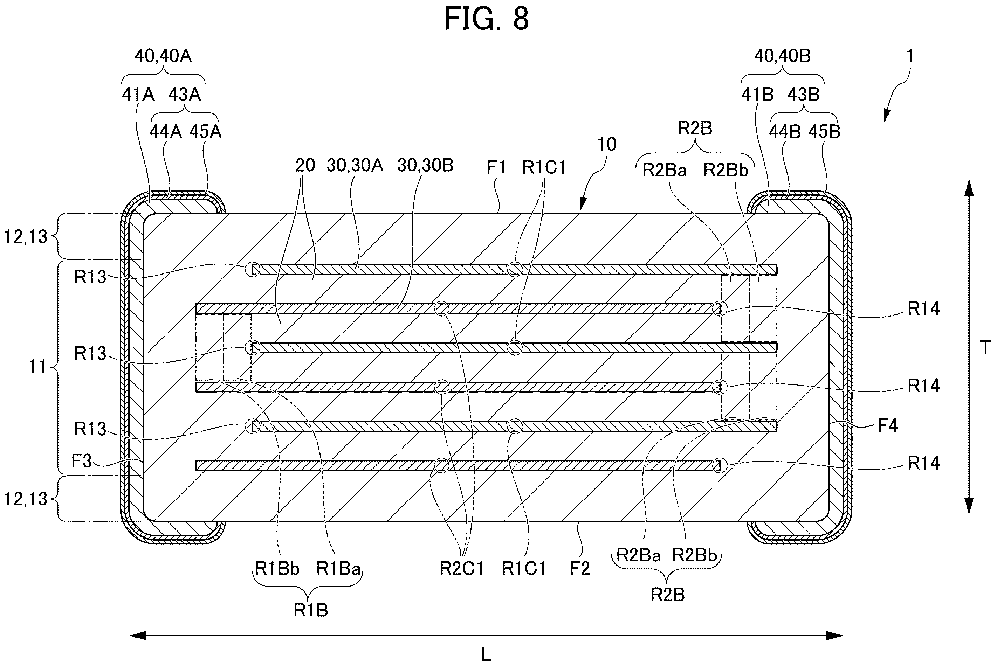

As shown in Fig. 8, on a cross-section passing through the first inner electrode 30A and the second inner electrode 30B and parallel to the lamination direction T and to the first direction L, the end portion on the third surface F3 side of the second inner electrode 30B is located closer to the third surface F3 side than the first inner electrode 30A.

Here, a cross-section which is parallel to the lamination direction T and to the first direction L, and on which an end portion on the third surface F3 side of the second inner electrode 30B is located closer to the third surface F3 side than the first inner electrode 30A may be referred to as an "intersecting portion LT cross-section" in some cases. Fig. 8 represents the intersecting portion LT cross-section. Fig. 8 shows the entirety of the multilayer ceramic capacitor 1 in the lamination direction T.

Meanwhile, within a portion of the end portion in the second direction W of the 1-2 region 32A overlapping the second inner electrode 30B in the lamination direction T, a range in which the LT cross-section passing through the 1-2 region 32A serves as the intersecting portion LT cross-section may be part of the portion of the end portion in the second direction W of the 1-2 region 32A overlapping the second inner electrode 30B in the lamination direction T. The same applies to the 2-2 region 32B.

On the intersecting portion LT cross-section, a total content of Ca and Sr in a region R13 where a distance from an end portion on the third surface F3 side of the first inner electrode 30A is equal to or below 5 µm is larger than a total content of Ca and Sr contained in a region R1C1 where a distance from the center of the first inner electrode 30A is equal to or below 5 µm.

On the intersecting portion LT cross-section, in a region interposed between the second inner electrodes 30B that are located adjacent to each other, a region located closer to the third surface F3 side than the first inner electrode 30A interposed between the second inner electrodes 30B located adjacent to each other will be defined as a "B region R1B".

A total content of Ca and Sr in the B region R1B is larger than the total content of Ca and Sr in the region R1C1 where the distance from the center of the first inner electrode 30A is equal to or below 5 µm.

A total content of Ca and Sr in a region R1Ba on an inner side in the first direction L when the B region R1B is divided into two equal pieces in the first direction L may be larger than a total content of Ca and Sr in a region R1Bb on an outer side in the first direction L when the B region R1B is divided into two equal pieces in the first direction L.

### Configuration of periphery of second inner electrode

### Configuration of portion on fifth surface side on WT cross-section

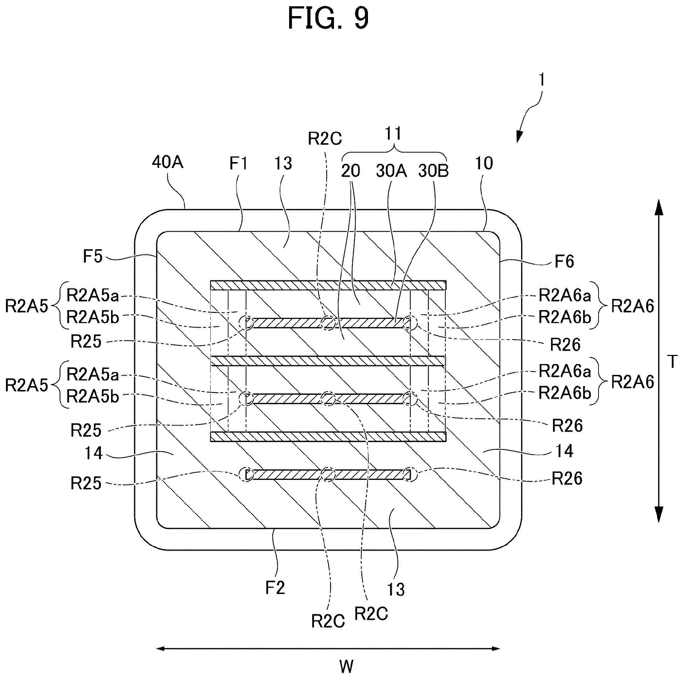

As shown in Fig. 9, on a cross-section passing through the first inner electrode 30A and the second inner electrode 30B and parallel to the lamination direction T and to the second direction W, the end portion on the fifth surface F5 side of the first inner electrode 30A is located closer to the fifth surface F5 side than the end portion on the fifth surface F5 side of the second inner electrode 30B.

Here, a cross-section which is parallel to the lamination direction T and to the second direction W, and on which the end portion on the fifth surface F5 side of the first inner electrode 30A is located closer to the fifth surface F5 side than the second inner electrode 30B may be referred to as a "second intersecting portion WT cross-section" in some cases. Fig. 9 represents the second intersecting portion WT cross-section. Fig. 9 shows the entirety of the multilayer ceramic capacitor 1 in the lamination direction T.

On the second intersecting portion WT cross-section, a total content of Ca and Sr in a region R25 where a distance from the end portion on the fifth surface F5 side of the second inner electrode 30B is equal to or below 5 µm is larger than a total content of Ca and Sr in a region R2C where a distance from the center in the second direction W of the second inner electrode 30B is equal to or below 5 µm.

On the second intersecting portion WT cross-section, in a region interposed between the first inner electrodes 30A that are located adjacent to each other, a region located closer to the fifth surface F5 side than the second inner electrode 30B interposed between the first inner electrodes 30A located adjacent to each other will be defined as an "A region R2A5".

A content of Ca in a region R2A5a on an inner side in the second direction W when the A region R2A5 is divided into two equal pieces in the second direction W may be larger than a content of Ca in a region R2A5b on an outer side in the second direction W when the A region R2A5 is divided into two equal pieces in the second direction W.

### Configuration of portion on sixth surface side on WT cross-section

On the second intersecting portion WT cross-section, an end portion on the sixth surface F6 side of the first inner electrode 30A may be located closer to the sixth surface F6 side than an end portion on the sixth surface F6 side of the second inner electrode 30B.

On the second intersecting portion WT cross-section, a total content of Ca and Sr in a region R26 where a distance from an end portion on the sixth surface F6 side of the second inner electrode 30B is equal to or below 5 µm is larger than the total content of Ca and Sr in the region R2C where the distance from the center in the second direction W of the second inner electrode 30B is equal to or below 5 µm.

On the second intersecting portion WT cross-section, in a region interposed between the first inner electrodes 30A that are located adjacent to each other, a region located closer to the sixth surface F6 side than the second inner electrode 30B interposed between the first inner electrodes 30A located adjacent to each other will be defined as an "A region R2A6". A content of Ca in a region R2A6a on an inner side in the second direction W when the A region R2A6 is divided into two equal pieces in the second direction W may be larger than a content of Ca in a region R2A6b on an outer side in the second direction W when the A region R2A6 is divided into two equal pieces in the second direction W.

### Configuration on LT cross-section

As shown in Fig. 8, on the cross-section (the intersecting portion LT cross-section) which is parallel to the lamination direction T and to the first direction L, and on which the end portion on the third surface F3 side of the second inner electrode 30B is located closer to the third surface F3 side than the end portion on the third surface F3 side of the first inner electrode 30A, the end portion on the third surface F3 side of the first inner electrode 30A is located closer to the fourth surface F4 side than the end portion on the third surface F3 side of the second inner electrode 30B.

On the intersecting portion LT cross-section, the total content of Ca and Sr in the region R13 where the distance from the end portion on the third surface F3 side of the first inner electrode 30A is equal to or below 5 µm is larger than the total content of Ca and Sr contained in the region R1C1 where the distance from the center of the first inner electrode 30A is equal to or below 5 µm.

On the intersecting portion LT cross-section, in a region interposed between the first inner electrodes 30A that are located adjacent to each other, a region located closer to the third surface F3 side than the second inner electrode 30B interposed between the first inner electrodes 30A located adjacent to each other will be defined as a "B region R2B".

A total content of Ca and Sr in the B region R2B is larger than a total content of Ca and Sr in a region R2C1 where a distance from the center of the second inner electrode 30B is equal to or below 5 µm.

A total content of Ca and Sr in a region R2Bb on an outer side in the first direction L when the B region R2B is divided into two equal pieces in the first direction L may be larger than a total content of Ca and Sr in a region R2Ba on an inner side in the first direction L when the B region R2B is divided into two equal pieces in the first direction L.

### Method of manufacturing multilayer ceramic capacitor 1

Subsequently, a method of manufacturing the multilayer ceramic capacitor 1 of the embodiment will be described.

### Dielectric sheet preparing step

Ceramic slurry including a ceramic raw material containing a dielectric ceramic material, a binder, a solvent, and the like is prepared. An additive agent such as a rare-earth element and a sintering aid is added to the ceramic slurry. Subsequently, the ceramic slurry is molded into a sheet-like shape and a dielectric sheet is thus formed. A dielectric sheet for an inner layer portion and a dielectric sheet for an outer layer portion are prepared as such dielectric sheets. Components contained in the dielectric sheet for the inner layer portion may be different from components contained in the dielectric sheet for the outer layer portion.

### Inner electrode pattern forming step

A pattern of the inner electrodes 30 (which may be simply referred to as an "inner electrode pattern" in some cases) is printed on the dielectric sheets by using the conductive paste. The inner electrode pattern is printed such that a portion constituting the 1-1 region 31A and a portion constituting the 1-2 region 32A are formed into desired shapes. The inner electrode pattern is formed in accordance with a printing technique such as screen printing, gravure printing, and relief printing.

### Level difference absorption paste disposing step

Level difference absorption paste is disposed on the dielectric sheet. The level difference absorption paste is disposed in a region on the dielectric sheet arranged in the first direction L with the 1-2 region 32A. Here, the level difference absorption paste is also disposed in a region on the dielectric sheet arranged in the first direction L with the 2-2 region 32B likewise, for example. A case of disposing the level difference absorption paste around the first inner electrode 30A will be described below as an example. Note that the region on the dielectric sheet arranged in the first direction L with the 1-2 region 32A is indicated as a "region R31" in Fig. 4, and the region on the dielectric sheet arranged in the first direction L with the 2-2 region 32B is indicated as a "region R32" in Fig. 5.

A concentration of an element in the multilayer body 10 can be locally adjusted by setting a concentration of a specific element in the level difference absorption paste higher than a concentration of the relevant element in the dielectric sheet for the inner layer portion. In addition, the element in the level difference absorption paste is diffused into the inner electrode pattern and the dielectric sheet. Accordingly, the concentration of the element in a portion of the inner electrode pattern located close to the level difference absorption paste can be set higher than the concentration of the element in a portion of the inner electrode pattern located away from the level difference absorption paste.

For example, by setting the concentration of Ca in the level difference absorption paste higher than the concentration of Ca in the dielectric sheet for the inner layer portion, it is possible to set the concentration of Ca in the portion of the inner electrode pattern located close to the level difference absorption paste (such as the end portion on the third surface F3 side of the first inner electrode 30A on the intersecting portion LT cross-section) higher than the concentration of Ca in the portion of the inner electrode pattern located away from the level difference absorption paste (such as the central portion in the first direction L of the first inner electrode 30A on the intersecting portion LT cross-section). Note that the same applies to the case of Sr. Meanwhile, the present invention is not limited to this configuration, and a concentration can be increased by changing a proportion between the BT particles and any of BCT particles, BST particles, and BSCT particles prepared by dissolving Ca or Sr in the BT particles in advance.

Although it depends on a width in the second direction W of the inner electrode, the level difference absorption paste is preferably disposed in such a way as to be located at a position equal to or above -30 µm and equal to or below 100 µm from an end edge of the inner electrode pattern. A symbol "-" means a state of being separated from the inner electrode while a symbol "+" means a state of overlapping the inner electrode. In this instance, when the shape of the inner electrode pattern is formed into a racket shape, level difference absorption paste with an increased proportion of the BCT particles, the BST particles, and the BSCT particles is partially disposed in an inclined region, and then the level difference absorption paste is disposed thereon in an overlapping manner by using a rectangular printing mask and a printing plate. In the meantime, without limitation to the foregoing, level difference absorption paste that is caused to contain a lot of CaCO₃ besides the BCT particles, the BST particles, and the BSCT particles may be disposed and then the level difference absorption paste may be disposed thereon in an overlapping manner by using a rectangular printing mask and a printing plate.

The level difference absorption paste may contain a component that can easily repel inner electrode paste as a binder component. In this case, excessive overlap of the inner electrode paste and the level difference absorption paste can be suppressed. This makes it possible to suppress the occurrence of an internal defect at the time of pressing attributed to a partial increase in thickness of the multilayer body.

After the inner electrode paste is printed, a portion of the inner electrode pattern serving as the 1-2 region 32A may be provided with a water-repellent film. In this case, it is possible to cause the level difference absorption paste to flow out of the inner electrode pattern when the level difference absorption paste runs on the inner electrode pattern. In this instance, the 1-2 region 32A may contain F (fluorine), Si, and the like, or the dielectric layer in the vicinity of the 1-2 region 32A may contain F or Si.

The level difference absorption paste contains the sintering aid such as Mg, Mn, Al, and V as an extra additive agent. An amount of the sintering aid included in the level difference absorption paste is preferably larger than an amount of a sintering aid included in the inner layer dielectric layer paste. In this case, it is possible to improve a sintering performance and to improve denseness in the vicinity of a region where the level difference absorption paste is disposed, so that deterioration in moisture resistance can be suppressed.

The level difference absorption paste may contain a rare-earth element. Examples of the rare-earth element include Dy, Tb, Ho, and Gd. When an amount of the rare-earth element contained in the level difference absorption paste is smaller than an amount of the rare-earth element contained in the dielectric layer paste, the rare-earth element contained in the inner layer dielectric layer paste may be excessively diffused to the region where the level difference absorption paste is disposed, whereby abnormal grain growth may occur at an end portion of the inner electrode. In this case, reliability may be deteriorated. In the meantime, when the amount of the rare-earth element contained in the level difference absorption paste is larger than the amount of the rare-earth element contained in the dielectric layer paste, the sintering performance may be reduced in the vicinity of the region where the level difference absorption paste is disposed, whereby denseness may be deteriorated. Accordingly, the amount of Dy in the level difference absorption paste is preferably set equal to or above 110% and equal to or below 400% relative to the amount of Dy in the ceramic slurry constituting the dielectric layer, for example.

Moreover, the level difference absorption paste preferably contains Si. An amount of Si contained in the level difference absorption paste is preferably adjusted as appropriate in conformity with a desired sintering performance of the dielectric layer paste as well as the type and the amount of the rare-earth element contained in the level difference absorption paste. The denseness in the vicinity of the region where the level difference absorption paste is disposed can be improved by increasing the amount of Si contained in the level difference absorption paste. The amount of Si contained in the level difference absorption paste is preferably set equal to or above 110% and equal to or below 200% relative to the amount of Si contained in the dielectric layer paste. Meanwhile, the level difference absorption paste may contain Li and Na. In this case, an amount of Li contained in the level difference absorption paste may be larger than an amount of Li contained in the dielectric layer paste, and an amount of Na contained in the level difference absorption paste may be larger than an amount of Na contained in the dielectric layer paste.

An amount of Sn contained in the level difference absorption paste is preferably set larger than a content percentage of Sn contained in the dielectric layer paste. The amount of Sn contained in the level difference absorption paste is preferably set equal to or above 0.1 mol% and equal to or below 3.0 mol%. This makes it possible to facilitate formation of the Sn layer in the 1-2 region 32A while suppressing the drop of the melting point of the inner electrode.

Note that the order of execution of the inner electrode pattern forming step and the level difference absorption paste disposing step is not limited to a particular order.

### Laminating step

The dielectric sheets for the inner layer portion are laminated. The dielectric sheets for the inner layer portion are laminated such that the inner electrode patterns on every two sheets located adjacent to each other are shifted by a half pitch in the first direction L. Subsequently, the dielectric sheets for the outer layer portion are laminated on two sides in the lamination direction T of the laminated dielectric sheets for the inner layer portion. The dielectric sheets for the outer layer portion are attached to the dielectric sheets by thermocompression bonding. Thus, a mother block is obtained. Here, each outer layer portion 13 may be formed from multiple dielectric sheets or formed from a single dielectric sheet.

### Pressing step

The mother block is pressed in the lamination direction T in accordance with a technique such as isostatic pressing.

In this case, when the inner electrode pattern is formed into an inner electrode pattern of a racket structure, a portion where the inner electrode pattern is absent is more likely to be formed in the vicinity of the region of the inner electrode pattern to serve as the 1-2 region 32A. When the mother block is pressed, the portion where the inner electrode pattern is absent is more likely to cause a relatively large strain.

However, a level difference due to the presence of the first inner electrode 30A is reduced by disposing the level difference absorption paste at the portion in the vicinity of the 1-2 region 32A where the inner electrode is absent. This configuration suppresses the occurrence of the local strain in the mother block having the inner electrode pattern of the racket structure.

Meanwhile, the composition of the level difference absorption paste can be adjusted independently of the composition of the dielectric sheet for the inner layer portion. For this reason, the composition of the dielectric layer 20 disposed in the vicinity of the 1-2 region 32A can be made different from the composition of the dielectric layer 20 disposed at another position. Moreover, by moving the element contained in the dielectric layer 20 into the 1-2 region 32A, the element contained in the 1-2 region 32A can be made different from the element contained in the 1-1 region 31A. In addition, the composition and the like of the dielectric body present in the vicinity of the 1-2 region 32A can also be made different.

### Mother block cutting step

The mother block is divided along cutting lines corresponding to dimensions of the multilayer body. The mother block is cut out by using a cutting machine equipped with a cutting blade, for example. The mother block is cut out in the lamination direction T along the first direction L and is cut out in the lamination direction T along the second direction W. Thus, multiple rectangular parallelepiped-shaped blocks (referred to as "multilayer chips") are obtained. Here, corner portions and ridge portions of each multilayer chip are preferably rounded by barrel polishing, for example.

### Side gap portion forming step

Ceramic slurry for side gaps is prepared. A composition of the ceramic slurry for the side gaps may be the same as or different from the composition of the ceramic slurry for the inner layer portion. An additive agent that is different from the additive agent to be added to the ceramic slurry for the inner layer portion may be added to the ceramic slurry for the side gaps. For example, Ca is contained in the ceramic slurry for the side gaps.

The ceramic slurry for the side gaps is applied onto a resin film and dried thereon. In this way, a dielectric sheet for the side gap portions is produced. The dielectric sheet for the side gap portions is attached to a surface of the multilayer chip where the inner electrode 30 is exposed. Thus, a layer constituting the side gap portion 14 is formed at the multilayer chip. Here, each side gap portion 14 may be formed from multiple dielectric sheets or formed from a single dielectric sheet. The side gap forming step is not always essential, and this step may be curtailed in a case where the inner electrode patterns are formed by disposing the inner electrode patterns with an interval in the second direction W therebetween, for example. Even in this case, however, the level difference absorption paste is disposed at the portion in the vicinity of the 1-2 region 32A where the inner electrode is absent.

### Multilayer body firing step

The multilayer chip is heated for a predetermined period of time in a nitrogen atmosphere at a predetermined firing temperature. The multilayer body 10 is obtained in this way.

### Underlying electrode forming step

Underlying electrodes 41 are formed at the third surface F3 and the fourth surface F4. Conductive paste containing a glass component and a metal is prepared as conductive paste constituting the underlying electrodes 41. The conductive paste constituting the underlying electrodes 41 is applied to the third surface F3 and the fourth surface F4. The conductive paste to be applied to the third surface F3 is applied in such a way as to cover all of the third surface F3, part of the first surface F1, part of the second surface F2, part of the fifth surface F5, and part of the sixth surface F6, for example. The conductive paste to be applied to the fourth surface F4 is applied in such a way as to cover all of the fourth surface F4, part of the first surface F1, part of the second surface F2, part of the fifth surface F5, and part of the sixth surface F6, for example.

### Underlying electrode baking step

The multilayer body 10 provided with the underlying electrodes 41 is heated for a predetermined period of time at a predetermined firing temperature in a nitrogen atmosphere. Thus, the underlying electrodes 41 are baked onto the multilayer body 10. Here, the multilayer body firing step may be executed simultaneously with the underlying electrode baking step.

### Plating step

The plated layer 43 is formed on the underlying electrode 41. The lower plated layer 44 is formed on the underlying electrode 41. Subsequently, the upper plated layer 45 is formed on the lower plated layer 44. The lower plated layer 44 is formed by Ni plating, for example. The upper plated layer 45 is formed by Sn plating, for example. The lower plated layer 44 and the upper plated layer 45 are sequentially formed in accordance with an electrolytic plating method, for example. Thus, the outer electrode 40 is formed.

The multilayer ceramic capacitor 1 shown in Fig. 1 is obtained as described above.

### Effects according to embodiment

According to the multilayer ceramic capacitor 1 of the above-described embodiment, it is possible to obtain the following effects.

According to the above-described embodiment, the multilayer body 10 includes the first inner electrodes 30A, the second inner electrodes 30B, and the dielectric layers 20 containing at least one element out of Ca and Sr. Each first inner electrode 30A has one end exposed onto the third surface F3, and each second inner electrode 30B has one end exposed onto the fourth surface F4. On the cross-section which is parallel to the lamination direction T and to the second direction W, and on which the end portion in the second direction W of the end portion on the fifth surface F5 side of the second inner electrode 30B is located closer to the fifth surface F5 side than the first inner electrode 30A, the total content of Ca and Sr in the region R15 where the distance from the end portion on the fifth surface F5 side in the second direction W of the first inner electrode 30A is equal to or below 5 µm is larger than the total content of Ca and Sr in the region R1C2 where the distance from the center in the second direction W of the first inner electrode 30A is equal to or below 5 µm.

When the shape of the first inner electrode 30A is formed into the racket shape, the WT cross-section at a certain position in the first direction L of the multilayer ceramic capacitor 1 becomes the first intersecting portion WT cross-section. In this case, the end portion of the first inner electrode 30A (the 1-2 region 32A) intersects with the end portion of the second inner electrode 30B, and the electric field concentration is thought to be likely to occur at the position of intersection. However, according to the above-described configuration, the end portion on one side in the second direction W of the first inner electrode 30A on the intersecting portion WT cross-section is located at the position of the end portion of the first inner electrode 30A intersecting with the end portion of the second inner electrode 30B. By increasing the total content of Ca and Sr in the region where the distance from the end portion on the one side in the second direction W of the first inner electrode 30A is equal to or below 5 µm, it is possible to suppress deterioration in insulating property due to oxygen vacancy migration at the portion prone to a deterioration in reliability.

Accordingly, it is possible to provide the multilayer ceramic capacitor 1 excellent in reliability.

Meanwhile, by forming the first inner electrode 30A into the racket shape, it is possible to lengthen a route that allows moisture on the outside of the multilayer body 10 to reach the first inner electrode 30A. Thus, it is possible to improve moisture resistance reliability of the multilayer ceramic capacitor 1.

According to the above-described embodiment, in the region interposed between the second inner electrodes 30B located adjacent to each other on the first intersecting portion WT cross-section, the region closer to one side (such as the fifth surface F5 side) in the second direction W than the first inner electrode 30A interposed between the second inner electrodes 30B located adjacent to each other is defined as the A region (such as the A region R1A5). In this case, the content of Ca in the region on the other side (such as the sixth surface F6 side) in the second direction W when the A region R1A5 is divided into two equal pieces in the second direction is larger than the content of Ca in the region on the one side (such as the fifth surface F5 side) in the second direction W when the A region R1A5 is divided into two equal pieces in the second direction W.

By increasing the content of the dielectric grains in the form of the BCT, the BST, and the BSCT in the vicinity in the second direction W of the 1-2 region 32A, it is possible to suppress deterioration in insulating property due to the oxygen vacancy migration.

According to the above-described embodiment, on the cross-section which is parallel to the lamination direction T and the first direction L, and on which the end portion on the third surface F3 side of the second inner electrode 30B is located closer to the third surface F3 side than the end portion on the third surface F3 side of the first inner electrode 30A, the total content of Ca and Sr in the region where the distance from the end portion on the third surface F3 side of the first inner electrode 30A is equal to or below 5 µm is larger than the total content of Ca and Sr contained in the region where the distance from the center of the first inner electrode 30A is equal to or below 5 µm.

When the shape of the first inner electrode 30A is formed into the racket shape, the LT cross-section at a certain position in the second direction W of the multilayer ceramic capacitor 1 becomes the intersecting portion LT cross-section. In this case, the end portion of the first inner electrode 30A (the 1-2 region 32A) intersects with the end portion of the second inner electrode 30B, and the electric field concentration is thought to be likely to occur at the position of intersection. However, according to the above-described configuration, by increasing the total content of Ca and Sr in the region where the distance from the end portion on the one side in the first direction L of the first inner electrode 30A is equal to or below 5 µm, it is possible to suppress deterioration in insulating property due to the oxygen vacancy migration in the vicinity of the location of the end portion of the first inner electrode 30A intersecting with the end portion of the second inner electrode 30B.

Accordingly, it is possible to provide the multilayer ceramic capacitor 1 excellent in reliability.

According to the above-described embodiment, in the region interposed between the second inner electrodes 30B located adjacent to each other, the region located closer to the third surface F3 side than the first inner electrode 30A interposed between the second inner electrodes 30B located adjacent to each other is defined as the B region R1B. In this case, the total content of Ca and Sr in the B region R1B is larger than the total content of Ca and Sr in the region where the distance from the center of the first inner electrode 30A is equal to or below 5 µm.

In general, Ba₁₋ₓCaₓTiO₃ or Ba₁₋ₓSrₓTiO₃ has a smaller lattice constant than BaTiO₃, and is therefore apt to trap oxygen vacancies. Meanwhile, the small lattice constant tends to reduce permittivity. Accordingly, the permittivity of the major part that constitutes the electrostatic capacity becomes relatively larger by adopting the above-described configuration, and reliability can be improved while maintaining the high electrostatic capacity as a whole by partially increasing Ca and Sr at the portion that is prone to deterioration in reliability.

According to the above-described embodiment, the total content of Ca and Sr in the region R1Ba on the inner side in the first direction L when the B region R1B is divided into two equal pieces in the first direction L is larger than the total content of Ca and Sr in the region R1Bb on the outer side in the first direction L when the B region R1B is divided into two equal pieces in the first direction L.

The content of the dielectric grains in the form of the BCT, the BST, and the BSCT is increased more in the vicinity in the second direction W of the 1-2 region 32A. Thus, it is possible to suppress deterioration in insulation property due to the oxygen vacancy migration.

Note that the same effects can also be obtained from a configuration corresponding to the configuration that provides the above-described effects, and from a configuration corresponding to the configuration that provides the above-described effects and related to the second inner electrode 30B.

The present invention is not limited to the configurations of the above-described embodiment, and it is possible to modify and apply the configurations as appropriate within the range not departing from the gist of the present invention. Note that the present invention also encompasses a combination of two or more desirable configurations described above in the embodiment.

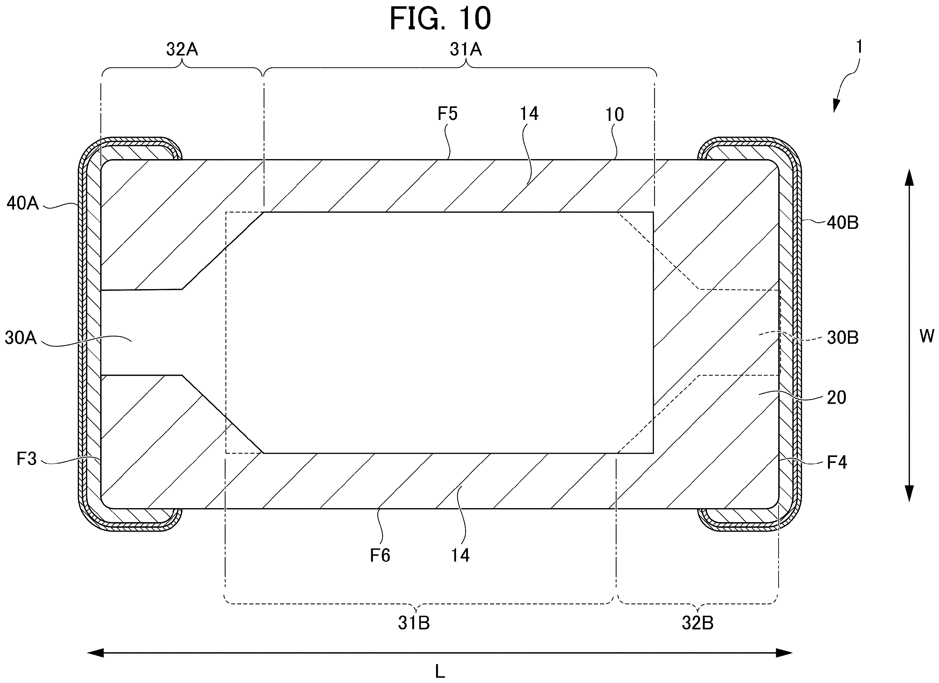

For example, in the above-described embodiment, the end portion on the fourth surface F4 side of the first inner electrode 30A intersects with the portion of the 2-2 region 32B where the dimension in the second direction W is constant, while the end portion on the third surface F3 side of the second inner electrode 30B intersects with the portion of the 1-2 region 32A where the dimension in the second direction W is constant when viewed in the lamination direction T. However, the present invention is not limited to these configurations. As shown in Fig. 10, when viewed in the lamination direction T, the end portion on the fourth surface F4 side of the first inner electrode 30A may intersect with a portion of the 2-2 region 32B where the dimension in the second direction W is gradually reduced from the third surface F3 side toward the fourth surface F4 side, while the end portion on the third surface F3 side of the second inner electrode 30B may intersect with a portion of the 1-2 region 32A where the dimension in the second direction W is gradually reduced from the fourth surface F4 side toward the third surface F3 side.

## Claims

1. A multilayer ceramic capacitor comprising:
a multilayer body having a first surface and a second surface opposed to each other in a lamination direction, a third surface and a fourth surface opposed to each other in a first direction orthogonal to the lamination direction, and a fifth surface and a sixth surface opposed to each other in a second direction orthogonal to the lamination direction and to the first direction;
a first outer electrode disposed on the third surface; and
a second outer electrode disposed on the fourth surface, wherein
the multilayer body includes
at least one first inner electrode having one end exposed onto the third surface,
at least one second inner electrode having one end exposed onto the fourth surface, and
at least one dielectric layer containing at least one element out of Ca and Sr, and
on a cross-section which is parallel to the lamination direction and to the second direction, and on which an end portion in the second direction of the second inner electrode is located closer to the fifth surface side than the first inner electrode, a total content of Ca and Sr in a region where a distance from an end portion on the fifth surface side of the first inner electrode is equal to or below 5 µm is larger than a total content of Ca and Sr in a region where a distance from a center in the second direction of the first inner electrode is equal to or below 5 µm.

2. The multilayer ceramic capacitor according to Claim 1, wherein
when, in a region interposed between second inner electrodes located adjacent to each other, a region located closer to the fifth surface side than a first inner electrode interposed between the second inner electrodes located adjacent to each other is defined as an A region, a content of Ca in a region on an inner side in the second direction when the A region is divided into two equal pieces in the second direction is larger than a content of Ca in a region on an outer side in the second direction when the A region is divided into two equal pieces in the second direction.

3. A multilayer ceramic capacitor comprising:
a multilayer body having a first surface and a second surface opposed to each other in a lamination direction, a third surface and a fourth surface opposed to each other in a first direction orthogonal to the lamination direction, and a fifth surface and a sixth surface opposed to each other in a second direction orthogonal to the lamination direction and to the first direction;
a first outer electrode disposed on the third surface; and
a second outer electrode disposed on the fourth surface, wherein
the multilayer body includes
at least one first inner electrode having one end exposed onto the third surface,
at least one second inner electrode having one end exposed onto the fourth surface, and
at least one dielectric layer containing at least one element out of Ca and Sr, and
on a cross-section which is parallel to the lamination direction and to the first direction, and on which an end portion on the third surface side of the second inner electrode is located closer to the third surface side than an end portion on the third surface side of the first inner electrode, a total content of Ca and Sr in a region where a distance from the end portion on the third surface side of the first inner electrode is equal to or below 5 µm is larger than a total content of Ca and Sr contained in a region where a distance from a center in the first direction of the first inner electrode is equal to or below 5 µm.

4. The multilayer ceramic capacitor according to Claim 3, wherein
when, in a region interposed between second inner electrodes located adjacent to each other, a region located closer to the third surface side than a first inner electrode interposed between the second inner electrodes located adjacent to each other is defined as a B region, a total content of Ca and Sr in the B region is larger than a total content of Ca and Sr in a region where a distance from a center of the first inner electrode is equal to or below 5 µm.

5. The multilayer ceramic capacitor according to Claim 4, wherein
a total content of Ca and Sr in a region on an outer side in the first direction when the B region is divided into two equal pieces in the first direction is larger than a total content of Ca and Sr in a region on an inner side in the first direction when the B region is divided into two equal pieces in the first direction.
